# EUROPEAN PATENT SPECIFICATION

(11) **EP 1 075 970 B1**
(45) Date of publication and mention of the grant of the patent: **27.10.2004**
(21) Application number: 00306893.9
(22) Date of filing: 11.08.2000
(51) Int. Cl.: B60C 11/04, B60C 11/13

(54) **Pneumatic tyre**
Luftreifen
Bandage pneumatique

(30) Priority: 12.08.1999 JP 22876799
(43) Date of publication of application: 14.02.2001
(73) Proprietor: Sumitomo Rubber Industries Ltd., Kobe-shi, Hyogo-ken (JP)
(72) Inventor: Nakagawa, Yoshiki, Nishinomiya-shi, Hyogo-ken (JP); Yoshioka, Tetsuhiko, Kobe-shi, Hyogo-ken (JP)
(74) Representative: Manitz, Finsterwald & Partner

(56) References cited:
- EP-A- 0 738 616
- EP-A- 0 836 955
- EP-A- 0 858 915
- WO-A-95/18022
- DE-A- 3 431 655
- DE-A- 4 220 677

## Description

The present invention relates to a pneumatic tyre with a wide groove such as central wide circumferential groove, more particularly to an improvement in the wide groove capable of preventing occurrence of bareness of tread rubber in the groove bottom.

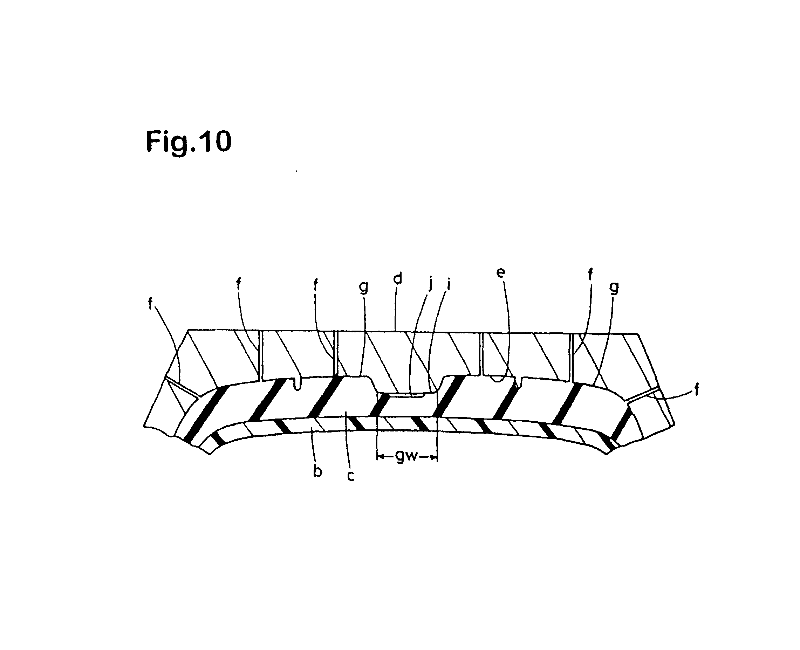

In general, a tyre mould (d) in which pneumatic tyres are vulcanised is, as shown in Fig.10, provided with vent holes (f) to remove air between the mould (d) and the tyre (c). If air is not fully removed, so called bareness of rubber occurs. Due to the vent holes (f), spues or pips of rubber are inevitably formed on the vulcanised tyre. Usually the spues are cut off before shipping. If spues are formed in tread grooves, it is hard to cut off the spues. Therefore, vent holes (f) usually avoid the groove wall and bottom.

In recent years, on the other hand, a wide circumferential groove (i) disposed in the tread centre is employed even in relatively small size tyres such as passenger car tyres in order to improve wet performance especially anti-aquaplaning performance, running noise and the like. In such a case, bareness (j) of tread rubber is liable occur in the bottom of the wide circumferential groove (i).

It is therefore, an object of the present invention to provide a pneumatic tyre with a wide groove, in which bareness of tread rubber in the groove bottom is effectively prevented.

According to the present invention, a pneumatic tyre comprises a wide groove having a bottom width of not less than 20 mm disposed in a tread portion, the wide groove provided on the groove bottom with at least one longitudinal rib extending in the longitudinal direction of the wide groove. Such tires are known from EP-A-0 836 955 and DE-A-3 431 655

Preferably lateral ribs are provided extending from the longitudinal rib which extend towards the tread face through the groove bottom and the groove walls.

Embodiments of the present invention will now be described in detail in conjunction with the accompanying drawings in which:
Fig.1 is a developed plan view of a pneumatic tyre according to the present invention;
Fig.2 is a perspective view of the tread portion thereof wherein spues remain in the tread surface;
Fig.3 is an enlarged sectional view of the wide groove taken along a line A-A of Fig.1;
Fig.4 is a cross sectional view of the longitudinal rib;
Fig.5 is a cross sectional view of the intermediate rib;
Fig.6 is a cross sectional view of the lateral rib;
Figs.7A, 7B, 7C and 7D are schematic plan views each showing another example of the intermediate rib arrangement;
Fig.8 is a diagram for explaining a tyre mould;
Fig.9 is a partial perspective view of the tyre mould showing a part corresponding with the wide groove shown in Fig.2; and
Fig.10 is a cross sectional view for explaining bareness of tread rubber in the groove bottom of a wide circumferential groove.

A pneumatic tyre according to the present invention comprises a tread portion 2, a pair of axially spaced bead portions and a pair of sidewall portions, and the tyre is reinforced with a carcass extending between the bead portions and a belt disposed in the tread portion. The tread portion 2 is provided with at least one wide groove 3. In this embodiment, the wide groove 3 is a circumferentially continuously extending groove.

### Wide groove

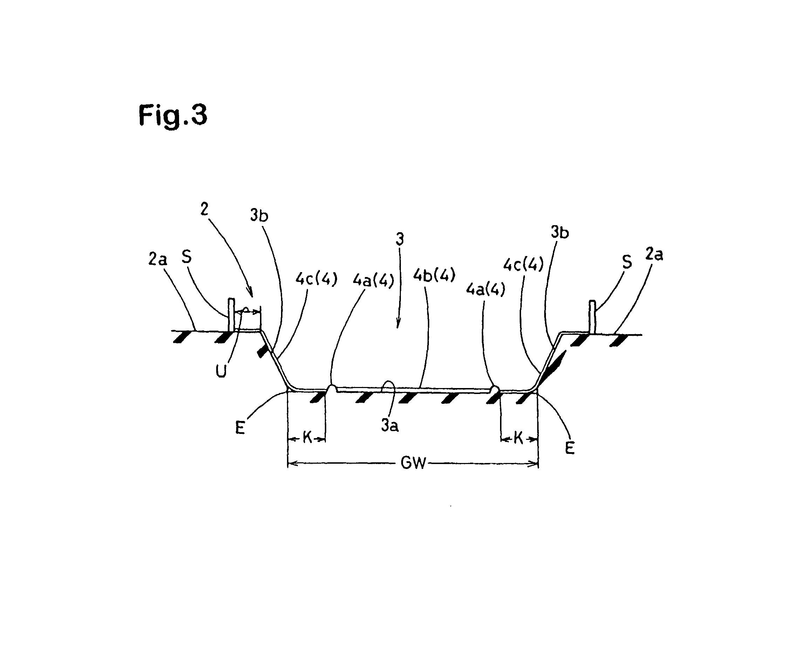

The wide groove 3 has a bottom width GW of not less than 20 mm, preferably not less than 22 mm. Usually, the corner between the groove bottom 3a and the groove wall 3b is rounded as shown in Fig.3. In this case, the width can be defined as measured from an intersection (hereinafter bottom edge E) of an extension of the groove bottom 3a and an extension of the groove wall 3b. On the other hand, the top width of the wide groove 3 is preferably not less than 35 mm. The above-mentioned grove widths are measured at a right angle to the longitudinal direction of the wide groove 3.

The depth of the wide groove 3 is preferably set in the range of from 3 to 6 % of the tread width.

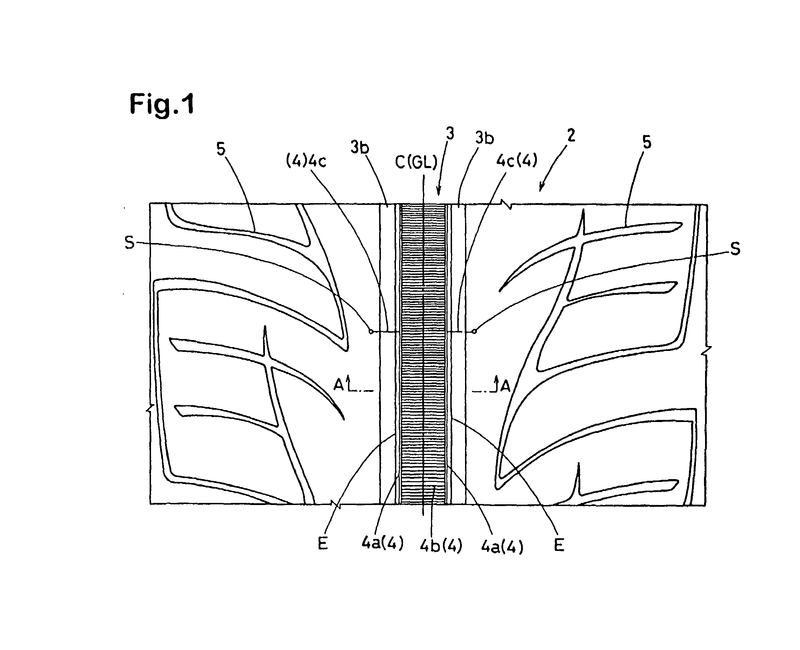

In Fig.1 showing an example of the tread pattern, the tread portion 2 is provided in the centre thereof with a single wide circumferential groove 3 which is straight and centred on the tyre equator C. This groove 3 is the only groove extending continuously in the tyre circumferential direction. Further, the tread portion 2 is provided on each side of the wide circumferential groove 3 with lateral grooves 5. In this example, the lateral grooves 5 constitute a plurality of groove sets, each set comprising an less-inclined oblique groove inclined at an angle of not more than 30 degrees with respect to the circumferential direction of the tyre, and a plurality of more-inclined oblique grooves which are inclined at an angle of more than 30 degrees with respect to the circumferential direction and join the less-inclined oblique groove. The tread pattern is unidirectional.

In the present invention, however, the wide groove 3 may be a zigzag or wavy groove, and two or more wide grooves 3 may be disposed in the tread portion 2.

The wide groove 3 is provided with at least one longitudinal rib 4a and a plurality of lateral ribs 4c. The longitudinal rib 4a is disposed on the groove bottom and extends along the longitudinal direction of the groove. The lateral ribs 4c extend from the longitudinal rib 4a towards the outside of the wide groove.

In an example of the wide circumferential groove 3 shown in Figs.1-3, as the groove is relatively wide, two longitudinal ribs 4a are provided and intermediate ribs 4b are further provided between them in addition to the lateral ribs 4c.

### Longitudinal rib

The longitudinal ribs 4a extend continuously in the longitudinal direction of the wide groove 3 or the tyre circumferential direction in this example, in parallel with each other. Each longitudinal rib 4a is disposed a small distance K from one of the bottom edges E towards the groove centre GL. The distance K is preferably set in the range of from 2 to 8 mm. The height h1 of the longitudinal rib 4a is preferably set in the range of from 0.2 to 1.5 mm, more preferably 0.3 to 0.8 mm from the groove bottom face 3a. The width W1 of the longitudinal rib 4a is preferably set in the range of from 0.4 to 3.0 mm, more preferably 0.6 to 1.6 mm.

If the distance K is more than 8 mm, bareness of rubber is liable to occur in a groove bottom part between the longitudinal rib 4a and the groove wall 3b. If the distance K is less than 2 mm, bareness of rubber is liable to occur in the groove centre if the intermediate ribs are not provided. When the height h1 of the longitudinal rib 4a is less than 0.2 mm, it is difficult to remove air from the groove bottom and bareness of rubber occurs. When the height h1 is more than 1.5 mm, there is a possibility that pass-by noise increases.

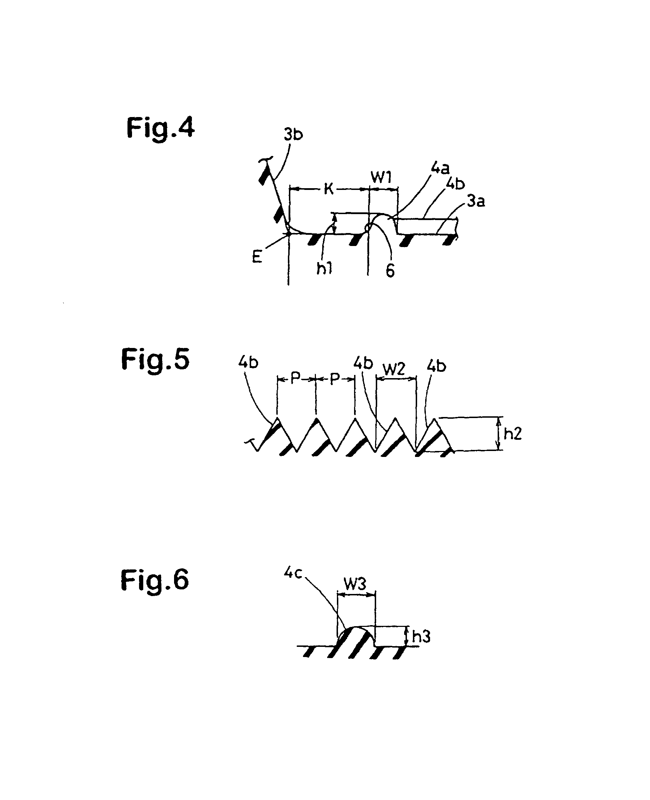

In this example, as shown in Fig.4, the sectional shape of the longitudinal rib 4a is a semicircle.

In order to fully prevent bareness of rubber in the groove bottom part between the longitudinal rib 4a and the groove wall 3b, it is preferable that the corner 6 between the longitudinal rib 4a and the bottom face 3a is rounded by a single radius arc or a multi-radius arc the radius of curvature of which gradually decreases towards the longitudinal rib 4a. For the same reason, it is preferable that the corner (E) between the bottom face 3a and the groove wall 3b is rounded by a single radius arc or a multi-radius arc of which radius of curvature gradually decreases towards the groove wall 3b.

### Intermediate rib

The intermediate ribs 4b are a large number of lateral ribs each extending from one of the longitudinal ribs 4a towards the other. The height h2 of the intermediate ribs 4b is preferably set in the range of from 0.2 to 1.5 mm, more preferably 0.2 to 0.8 mm from the groove bottom face 3a. The height h2 is not more than height h1, preferably less than the height h1. The width W2 of the intermediate ribs 4b is preferably set in the range of from 0.8 to 3 mm.

The intermediate ribs 4b are arranged at pitches P of 0.8 to 3 mm in the longitudinal direction of the wide groove. Preferably, the pitches P are substantially constant.

In a plan view, the intermediate ribs 4b are inclined at an angle θ of not less than 30 degrees, preferably not less than 45 degrees, more preferably substantially 90 degrees with respect to the longitudinal direction of the wide groove.

In this example, as shown in Fig.5, the sectional shape of the intermediate rib 4b is a triangle. The pitches P are equal to the width W2.

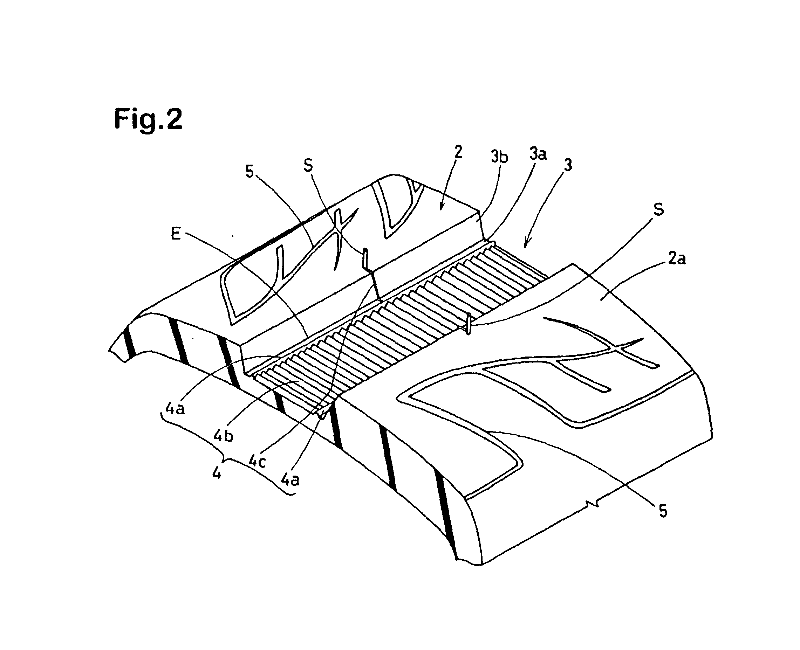

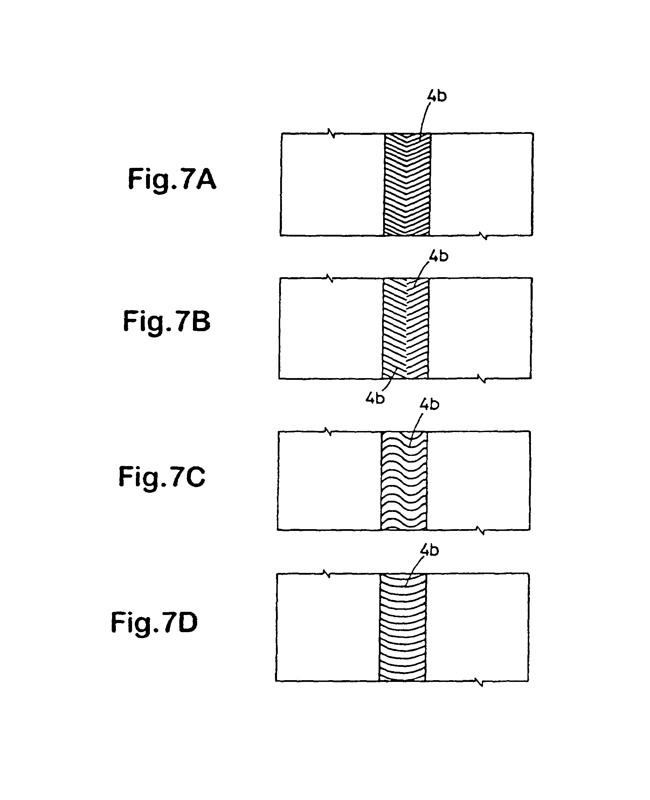

In the example shown in Figs.1 and 2, the intermediate ribs 4b extend straight from one of the longitudinal ribs 4a to the other and are arranged in a parallel formation. But, as shown in Figs.7A-7D, various shapes and formation may be employed. In Fig.7A showing V-shaped ribs in a parallel formation, the V-shaped intermediate ribs 4b extend from one of the longitudinal ribs 4a to the other. In Fig.7B showing half-length straight ribs in a staggered V-formation, the intermediate ribs 4b extend straight from the longitudinal ribs 4a to the groove centre line and they are staggered on the groove centre line. In Fig.7C showing zigzag or wavy ribs in a parallel formation, the zigzag intermediate ribs 4b extend from one of the longitudinal ribs 4a to the other. In Fig.7D showing U-shaped or arced ribs in a parallel formation, the U-shaped intermediate ribs 4b extend from one of the longitudinal ribs 4a to the other.

### Lateral rib

The lateral ribs 4c extend from the longitudinal ribs 4a in the direction away from the groove centre GL through the groove bottom 3a and groove wall 3b to the tread surface 2a. More specifically they extend to spues S or pips of rubber or vestiges thereof on the tread surface 2a positioned at a distance U of 2 to 10 mm preferably 2 to 5 mm from the edges of the wide circumferential groove 3.

The height h3 of the lateral rib 4c is preferably set in the range of from 0.2 to 0.8 mm. The width W3 of the lateral rib 4c is preferably set in the range of from 0.4 to 1.6 mm.

In this example, as shown in Fig.6, the sectional shape of the lateral rib 4c is a semicircle.

### Tyre Mould

The above-mentioned various ribs 4a, 4b and 4c are moulded by a tyre mould M together with the wide circumferential groove 3, lateral grooves 5, and the like.

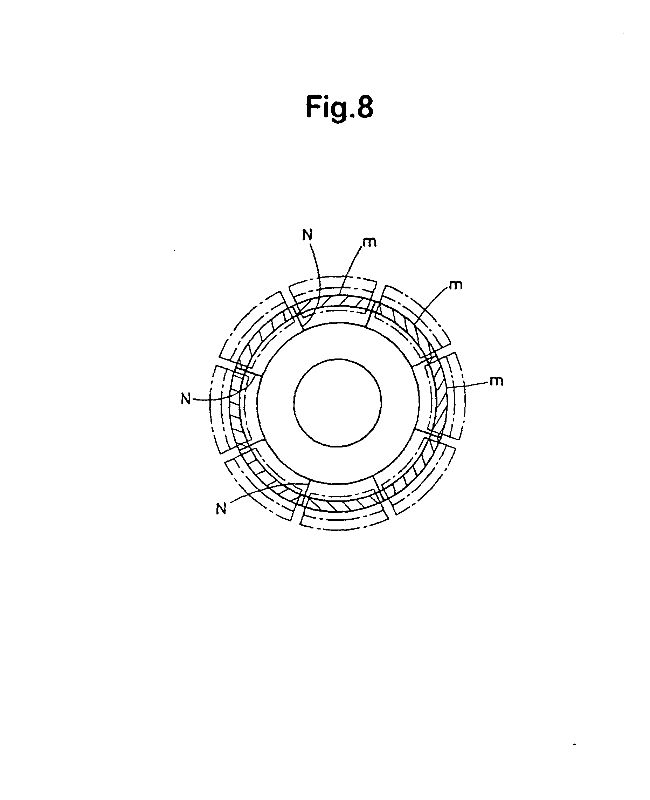

For example, as schematically shown in Fig.8, the tyre mould M is a segmental mould comprising a plurality of circumferentially divided, radially movable sectors (m) for forming the tread portion 2. When the sectors (m) are at their radially innermost positions, the inner surfaces thereof collectively form a circumferentially continuously extending tread-forming face M2.

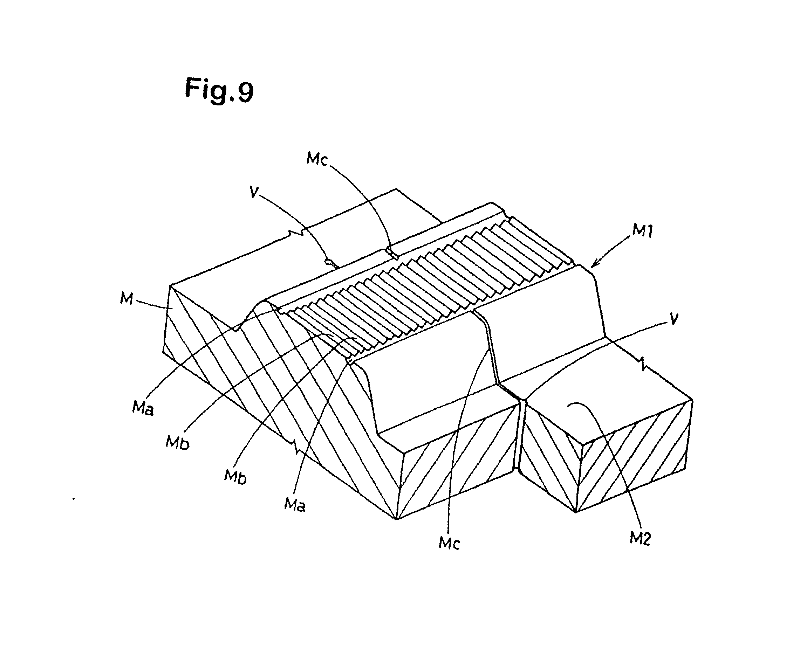

Fig.9 shows a part of the tread-forming face M2, which is provided with: a rib M1 for forming the wide circumferential groove 3 (hereinafter circumferential-groove-forming rib M1); grooves Ma for forming the longitudinal ribs 4a (hereinafter longitudinal-rib-forming grooves Ma); grooves Mb for forming the intermediate ribs 4b (hereinafter intermediate-rib-forming grooves Mb); and grooves Mc for forming the lateral ribs 4c (hereinafter lateral-rib-forming grooves Mc) . The sizes and shapes of the rib M1 and grooves Ma, Mb and Mc correspond to those of the wide groove 3 and ribs 4a, 4b and 4c. Thus a detailed description is omitted.

The tread-forming face M2 is further provided with vent holes V in a face for forming the tread surface 2a (hereinafter tread-surface-forming face). The vent holes V are positioned at a distance (U) of from 2 to 10 mm preferably 2 to 5 mm from the edges of the wide circumferential groove 3 as shown in Fig.3.

Each of the lateral-rib-forming groove Mc extends from one of the longitudinal-rib-forming grooves Ma to one of the vent holes V.

In this example, each sector (m) is provided with at least one lateral-rib-forming groove Mc, preferably at least two lateral-rib-forming grooves Mc one on each side of the circumferential-groove-forming rib M1.

Therefore, air between the mould and the tyre can be easily discharged through the grooves Ma, Mb and Mc and vent holes V.

In the tread surface 2a, by the vent holes and lateral-rib-forming groove Mc, there are formed spues S of rubber and part of the lateral ribs 4c, which part may be removed from the tread surface together with the spues S.

### Comparison Tests

Test tyres of size 245/45ZR16 having the tread portion shown in Figs.1 to 3 and specifications shown in Table 1 were made and tested for occurrence of bareness, pass-by noise and anti-aquaplaning performance.

### Bareness test

For each test tyre, a hundred samples were made and checked to see if bareness of rubber occurred in the groove bottom of the wide circumferential groove. The results are indicated by an index based on Reference tyre being 100. The smaller the value, the lesser the bareness.

### Pass-by noise test

According to JASO C-606, a test car (3000 cc FR passenger car) provided on all wheels with test tyres was coasted on a smooth asphalt road at a speed of 53 km/h for a distance of 50 meters, and in the middle of the course, the maximum level in dB(A) of the pass-by noise was measured with a microphone fixed at a position 7.5 meter sideways from the centre line of the running course and 1.2 meter height from the road surface. The tyres were mounted on a standard rim of size 8JJX16 and inflated to an inner pressure of 200 kPa. The test results are indicated by an index based on Reference tyre being 100. The smaller the value, the lower the noise level.

### Anti-aquaplaning performance test

The test car was run on a 100m radius asphalt course provided with a 5 mm depth 20 m length water pool, and changing the entering speed, the lateral acceleration (lateral G) was measured on the front wheels to obtain the average lateral G from 50 to 80 km/h. The test results are indicated by an index based on Reference tyre being 100. The larger the value, the better the performance.

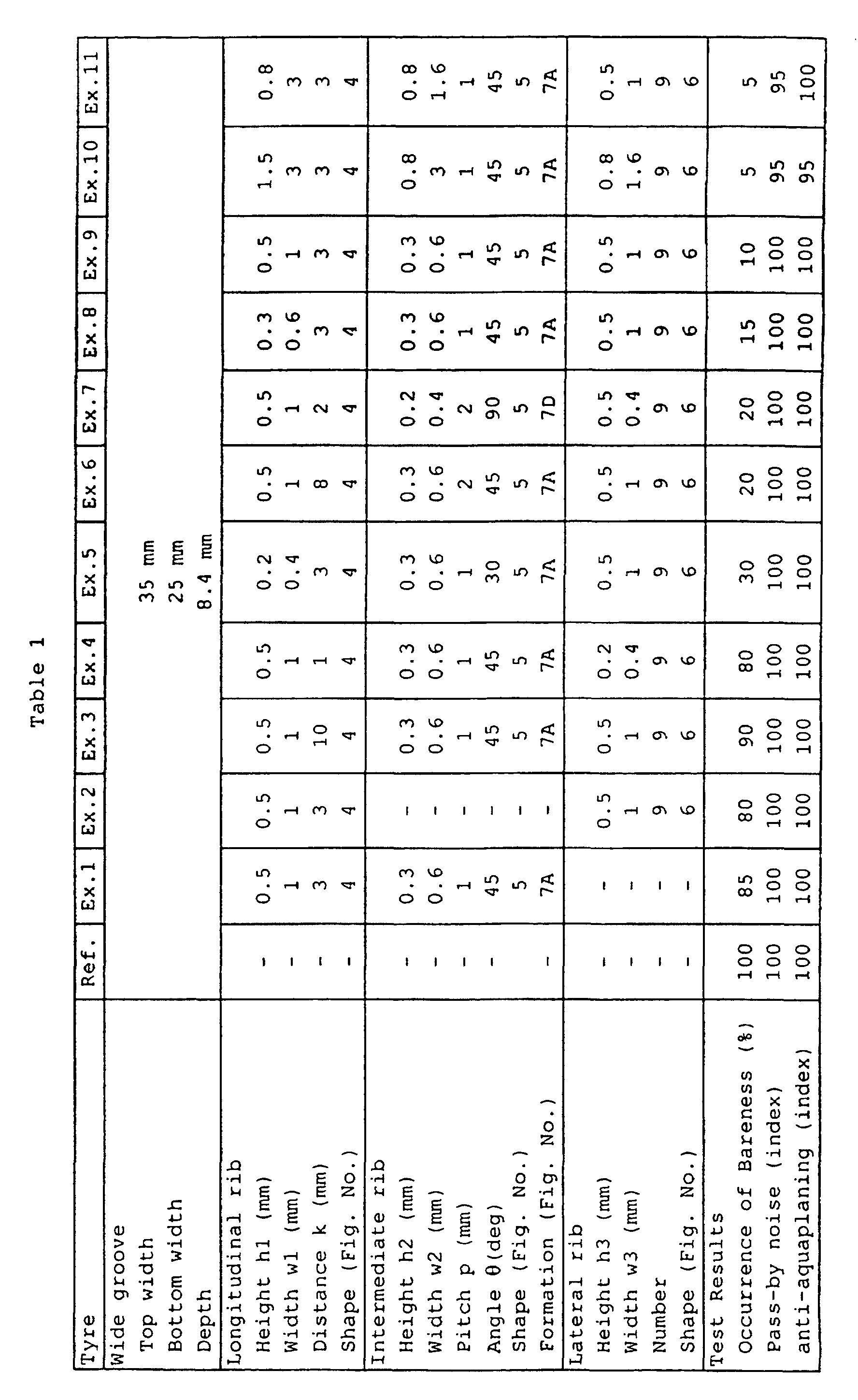

It was confirmed from the tests that, in the tyres according to the invention, the occurrence of bareness was effectively controlled without deteriorating the anti-aquaplaning performance and noise performance.

The present invention suitably applied to radial tyres for passenger cars, but it is also possible to apply to various pneumatic tyres. Further, the longitudinal ribs, intermediate ribs and lateral ribs may be formed in various cross-sectional shapes in addition to the semicircle and triangle.

## Claims

1. A pneumatic tyre comprising a wide groove (3) having a bottom width (GW) of not less than 20 mm disposed in a tread portion (2) the wide groove provided on the groove bottom (3a) with at least one longitudinal rib (4a) extending in the longitudinal direction of the wide groove (3), **characterised by** lateral ribs (4c) extending from said at least one longitudinal rib (4a) towards a tread face (2a) through the groove bottom (3a) and a groove wall (3b) of the wide groove (3).

2. A pneumatic tyre according to claim 1, **characterised by** the lateral ribs (4c) extending from the longitudinal rib (4a) into the tread face.

3. A pneumatic tyre according to claim 2, **characterised in that** the lateral ribs (4c) extend to spues (S) formed in the tread face or vestiges thereof.

4. A pneumatic tyre according to any of claims 1 to 3, **characterised in that** said at least one longitudinal rib (4a) is two parallel longitudinal ribs (4a), and said wide groove (3) is further provided between said two parallel longitudinal ribs (4a) with intermediate ribs (4b) joining the longitudinal ribs.

5. A pneumatic tyre according to claim 4, **characterised in that** said intermediate ribs (4b) are straight or V-shaped or U-shaped and are arranged in a parallel formation.

6. A pneumatic tyre according to claim 4, **characterised in that** said intermediate ribs (4b) are straight and are arranged in a staggered V-formation.

7. A pneumatic tyre according to claim 4, 5, or 6, **characterised in that** each said intermediate rib (4b) is at an inclination angle of not less than 30 degrees with respect to the longitudinal direction of the wide groove (3).

8. A pneumatic tyre according to any of claims 1 to 7, **characterised in that** each longitudinal rib (4a) has a height of 0.2 to 1.5 mm and a width of 0.4 to 3.0 mm, and each lateral rib (4c) has a height of 0.2 to 0.8 mm and a width of 0.4 to 1.6 mm.

9. A pneumatic tyre according to claim 4 or 5 to 8 dependent on claim 3, **characterised in that** each intermediate rib (4b) has a height of 0.2 to 1.5 mm and a width of 0.8 to 3 mm.

10. A pneumatic tyre according to claim 4 or claims 5 to 8 dependent on claim 3, **characterised in that** each of the longitudinal ribs (4a) and lateral ribs (4c) has a rounded sectional shape, and each of the intermediate ribs (4b) has a triangular sectional shape.

## Patentansprüche

1. Luftreifen mit einer breiten Rille (3), die eine Bodenbreite (GW) von nicht weniger als 20 mm aufweist und in einem Laufstreifenabschnitt (2) angeordnet ist, wobei die breite Rille am Rillenboden (3a) mit mindestens einer Längsrippe (4a) versehen ist, die sich in der Längsrichtung der breiten Rille (3) erstreckt, **dadurch gekennzeichnet, dass** sich Querrippen (4c) von der mindestens einen Längsrippe (4a) in Richtung einer Laufstreifenseite (2a) durch den Rillenboden (3a) und eine Rillenwand (3b) der breiten Rille (3) erstrecken.

2. Luftreifen nach Anspruch 1, **dadurch gekennzeichnet, dass** die Querrippen (4c) sich von der Längsrippe (4a) in die Laufstreifenseite hinein erstrecken.

3. Luftreifen nach Anspruch 2, **dadurch gekennzeichnet, dass** die Querrippen (4c) sich bis zu Angüssen (S), die in der Laufstreifenseite ausgebildet sind, oder Resten von diesen erstrecken.

4. Luftreifen nach einem der Ansprüche 1 bis 3, **dadurch gekennzeichnet, dass** die mindestens eine Längsrippe (4a) aus zwei parallelen Längsrippen (4a) besteht, wobei die breite Rille (3) ferner zwischen den beiden parallelen Längsrippen (4a) mit Zwischenrippen (4b) versehen ist, die die Längsrippen miteinander verbinden.

5. Luftreifen nach Anspruch 4, **dadurch gekennzeichnet, dass** die Zwischenrippen (4b) gerade oder V-förmig oder U-förmig sind und in einer parallelen Anordnung vorgesehen sind.

6. Luftreifen nach Anspruch 4, **dadurch gekennzeichnet, dass** die Zwischenrippen (4b) gerade sind und in einer gestaffelten V-Anordnung vorgesehen sind.

7. Luftreifen nach Anspruch 4, 5 oder 6, **dadurch gekennzeichnet, dass** jede Zwischenrippe (4b) unter einem Neigungswinkel von nicht weniger als 30 Grad in Bezug auf die Längsrichtung der breiten Rille (3) angeordnet ist.

8. Luftreifen nach einem der Ansprüche 1 bis 7, **dadurch gekennzeichnet, dass** jede Längsrippe (4a) eine Höhe von 0,2 bis 1,5 mm und eine Breite von 0,4 bis 3,0 mm aufweist, und dass jede Querrippe (4c) eine Höhe von 0,2 bis 0,8 mm und eine Breite von 0,4 bis 1,6 mm aufweist.

9. Luftreifen nach Anspruch 4 oder den Ansprüchen 5 bis 8, abhängig von Anspruch 3, **dadurch gekennzeichnet, dass** jede Zwischenrippe (4b) eine Höhe von 0,2 bis 1,5 mm und eine Breite von 0,8 bis 3 mm aufweist.

10. Luftreifen nach Anspruch 4 oder den Ansprüchen 5 bis 8, abhängig von Anspruch 3, **dadurch gekennzeichnet, dass** jede Längsrippe (4a) und Querrippe (4c) eine gerundete Querschnittsform aufweist, und dass jede Zwischenrippe (4b) eine dreieckige Querschnittsform aufweist.

## Revendications

1. Bandage pneumatique comprenant une rainure large (3) possédant une largeur inférieure (GW) non inférieure à 20 mm disposée dans une portion de chape (2), la rainure large prévue sur le fond de la rainure (3a) avec au moins une nervure longitudinale (4a) s'étendant dans le sens longitudinal de la rainure large (3), **caractérisé par** des nervures latérales (4c) s'étendant à partir de ladite nervure longitudinale au moins (4a) vers une face de chape (2a) au sein du fond de la rainure (3a) et d'une paroi de rainure (3b) de la rainure large (3).

2. Bandage pneumatique selon la revendication 1,
**caractérisé par** les nervures latérales (4c) s'étendant à partir de la nervure longitudinale (4a) dans la face de chape.

3. Bandage pneumatique selon la revendication 2,
**caractérisé en ce que** les nervures latérales (4c) s'étendent jusqu'à des repousses (S) formées dans la face de chape ou des vestiges de celles-ci.

4. Bandage pneumatique selon l'une quelconque des revendications 1 à 3, **caractérisé en ce que** ladite nervure longitudinale au moins (4a) est deux nervures longitudinales parallèles (4a), et **en ce que** ladite rainure large (3) est en outre prévue entre lesdites deux nervures longitudinales parallèles (4a) avec des nervures intermédiaires (4b) joignant les nervures longitudinales.

5. Bandage pneumatique selon la revendication 4,
**caractérisé en ce que** lesdites nervures intermédiaires (4b) sont droites ou en forme de V ou de U, et sont agencées selon une formation parallèle.

6. Bandage pneumatique selon la revendication 4,
**caractérisé en ce que** lesdites nervures intermédiaires (4b) sont droites et sont agencées selon une formation en V décalés.

7. Bandage pneumatique selon la revendication 4, 5 ou 6, **caractérisé en ce que** chacune desdites nervures intermédiaires (4b) est à un angle d'inclinaison non inférieur à 30 degrés par rapport au sens longitudinal de la rainure large (3).

8. Bandage pneumatique selon l'une quelconque des revendications 1 à 7, **caractérisé en ce que** chaque nervure longitudinale (4a) possède une hauteur de 0,2 à 1,5 mm et une largeur de 0,4 à 3,0 mm, et **en ce que** chaque nervure latérale (4c) possède une hauteur de 0,2 à 0,8 mm et une largeur de 0,4 à 1,6 mm.

9. Bandage pneumatique selon la revendication 4 ou les revendications 5 à 8 dépendant de la revendication 3, **caractérisé en ce que** chaque nervure intermédiaire (4b) possède une hauteur de 0,2 à 1,5 mm et une largeur de 0,8 à 3 mm.

10. Bandage pneumatique selon la revendication 4 ou les revendications 5 à 8 dépendant de la revendication 3, **caractérisé en ce que** chacune des nervures longitudinales (4a) et des nervures latérales (4c) possède une forme transversale arrondie, et **en ce que** chacune des nervures intermédiaires (4b) possède une forme transversale triangulaire.
